# EUROPÄISCHE PATENTSCHRIFT

(11) **EP 1 762 469 B1**
(45) Veröffentlichungstag und Bekanntmachung des Hinweises auf die Patenterteilung: **14.10.2009**
(21) Anmeldenummer: 06017858.9
(22) Anmeldetag: 28.08.2006
(51) Int. Cl.: B62D 25/14

(54) **Querträgeranordnung, insbesondere für ein Kraftfahrzeug**
Crossbeam, especially for motor vehicle
Traverse, notamment de véhicule automobile

(30) Priorität: 07.09.2005 DE 102005042588
(43) Veröffentlichungstag der Anmeldung: 14.03.2007
(73) Patentinhaber: Behr GmbH & Co. KG, 70469 Stuttgart (DE)
(72) Erfinder: Specht, Gregor, Dipl.-Ing., 70435 Stuttgart (DE)
(74) Vertreter: Mantel, Berthold Friedrich

(56) Entgegenhaltungen:
- EP-A- 1 580 048
- DE-A1- 10 254 348
- DE-A1- 19 534 568
- DE-A1- 19 535 263
- DE-A1-102004 053 380

## Beschreibung

Die Erfindung betrifft eine Querträgeranordnung insbesondere für ein Kraftfahrzeug, gemäß dem Oberbegriff des Anspruchs 1.

Aus der DE 102 21 654 A1 ist ein Querträger für ein Kraftfahrzeug bekannt, der aus einer oberen Halbschale und einer unteren Halbschale besteht, die an ihren einander zugewandten Enden Laschen aufweisen, welche durch einen Klebstoff miteinander verklebt sind. Zur Befestigung von Elementen, wie beispielsweise der Lenksäule, ist am Querträger ein Halter mittels mehrerer Schrauben befestigt. Die Schrauben sind nach dem Verschrauben verklebt.

In der DE 102 54 348 A1 ist eine Baugruppe für einen Cockpitbereich, bestehend aus einem Querträger und einem Armaturenbrett beschrieben, die aus einem Fahrer-, einem Mittel- und einem Beifahrermodul aufgebaut ist. An diesen die Modulen sind Adapterstücke und Anbauteile, wie beispielsweise Halter befestigbar.

Des Weiteren ist aus der DE 195 34 568 A1 eine Halterungsvorrichtung für ein Kraftfahrzeugarmaturenbrett bekannt, welche einen starren Träger umfasst, der an der Fahrzeugstruktur in einer in etwa horizontalen Stellung befestigt wird und als Auflage für das Armaturenbrett dienen kann. Der Träger umfasst Wände, die einen Hohlraum begrenzen, in dem sich Stromkabel unterbringen lassen, die an Einrichtungen und/oder Bedientafeln angeschlossen werden können, die in oder in der Nähe des Armaturenbretts angeordnet sind.

Ferner sind Querträger oder andere Strukturbauteile bekannt, an denen Halter direkt angeschweißt sind.

Derartige Querträger lassen jedoch noch Wünsche offen.

Es ist Aufgabe der Erfindung, eine verbesserte Querträgeranordnung mit einem Querträger und einem hochintegrativen Modulbauteil, insbesondere für ein Kraftfahrzeug, zur Verfügung zu stellen, welches hochflexibel gestalt- und einsetzbar ist.

Diese Aufgabe wird gelöst durch eine Querträgeranordnung, mit den Merkmalen des Anspruchs 1. Vorteilhafte Ausgestaltungen sind Gegenstand der Unteransprüche. Der Begriff des Querträgers ist nicht nur im Sinne eines Strukturbauteils zur Verbindung der A-Säulen eines Fahrzeugs, sondern allgemein als Strukturbauteil, eines Fahrzeugs zu betrachten, also beispielsweise auch ein Frontendstrukturbauteil.

Erfindungsgemäß ist eine Querträgeranordnung, insbesondere für ein Kraftfahrzeug, vorgesehen, die zumindest aus einem Querträger an dem mindestens ein hochintegratives Modulbauteil angebracht ist, besteht, wobei das hochintegrative Modulbauteil zur Anbringung von Bauteilen am Querträger dient. Das hochintegrative Modulbauteil weist eine in Teilbereichen dem Außenprofil des Querträgers korrespondierende Aufnahme für den Querträger auf, welche einen Kontaktbereich zwischen dem hochintegrativen Modulbauteil und dem Querträger bildet, und ist am Querträger mittels mindestens eines den Querträger in seinem Umfang zumindest teilweise umschließenden Befestigungselements lösbar angebracht. Wobei diese Lösbarkeit als weitestgehend zerstörungsfrei zu sehen ist. Ein wiederholtes Fügen ist dabei mit geringem Aufwand möglich.

Unter einem hochintegrativen Modulbauteil ist im Sinne der Erfindung ein Bauteil zu verstehen, das mindestens 2, 3, 4 oder 5, bevorzugt 6, 7, 8 oder 9 und besonders bevorzugt 10 oder mehr als 10 Integrations-, Anbindungs- und/oder Haltelemente aufweist. Das hochintegrative Modulbauteil ist insbesondere als im Wesentlichen flächig ausgebildetes Spritzguss- oder Stanz-Biegeteil ausgeführt.

Im Kontaktbereich zwischen dem hochintegrativen Modulbauteil und dem Querträger ist es nicht zwingend erforderlich, dass es sich um einen unmittelbaren Kontakt der beiden Bauteile handelt, vielmehr ist damit auch ein mittelbarer Kontakt beispielsweise über ein dazwischenliegendes Medium oder Element, wie beispielsweise eine Dämpfungs-, lsolier-. oder Klebstoffschicht mit eingeschlossen.

Das Befestigungselement kann hierbei auch mehrteilig ausgebildet sein, wobei ein Bereich des hochintegrativen Modulbauteils auch einen Teil des mehrteiligen Befestigungselements bilden kann. Bevorzugt ist als Befestigungselement oder Teil des Befestigungselements eine Lasche, ein Kabelbinder, eine Metallschelle, eine Schlauchschelle, eine Befestigungsschelle beispielsweise aus Polyamid, ein Klettverschluss-Kabelbinder oder zumindest ein zweites hochintegratives Modulbauteil vorgesehen.

Das hochintegrative Modulbauteil, an welchem vorzugsweise verschiedene, am Querträger anzubringende Bauteile angebracht werden können, weist beispielsweise folgende Integrations-, Anbindungs- und/oder Haltelemente auf: Durchbrüche, Löcher, Schrauben, Muttern, Aufsteckmuttern, Schraubdome, Blindniet-Verbinder, Metallschellen, Kabelbinder, Kunststoff- oder Metallhalter für Anbauteile, Stecker, Filzbänder, (Schaum-)Dichtungen, Kleb- und Dichtstoffe, schall- oder schwingungsdämpfende Elemente, Teile von Clips-Verbindungen, Justierelemente, Magnete, Oberflächen mit Hakencharakter und/oder Haftvermögen, Hakenbänder, Bestandteile eines Klettver-schlusses oder Rohr- und Kabelhalter. Derartige hochintegrative Modulbauteile lassen sich relativ kostengünstig in kleineren Spritzguss-Werkzeugen mit kürzeren Zykluszeiten, höheren Standzeiten und größeren Ausstoßraten als im Falle eines direkten Anspritzens am Querträger herstellen. Zudem ergeben sich gegenüber angeschweißten Komponenten Gewichtsvorteile und zusätzliche Freiheitsgrade in Hinblick auf die Konstruktion und Funktionalität. Durch die getrennte Ausbildung, insbesondere einer begrenzten Anlage- oder Kontaktfläche, können Änderungen der Konstruktion im Bereich eines hochintegrativen Modulbauteils oder des Querträgers einfacher realisiert werden, da der Querträger und das hochintegrative Modulbauteil im Wesentlichen unabhängig voneinander ausgebildet sind. Bei der Herstellung des Querträgers und dem Anschweißen von Anbindungen, wie Haltern für die A-Säulen, muss keine Rücksicht auf Kunststoffteile genommen werden, da diese erste in einem späteren Fertigungsschritt angebracht werden. Somit ist die Wahl der Schweißverfahren für die Herstellung des Querträgers samt angeschweißter Anbindungen weniger eingeschränkt. Die hochintegrativen Modulbauteile können durch ihren Modulcharakter leichter an verschiedene Modelle und Varianten von Fahrzeugen angepasst werden, indem sie entsprechend miteinander kombiniert werden. Hierfür sind in Längsrichtung des Querträgers bevorzugt drei hochintegrative Modulbauteile angeordnet, zugeordnet der Fahrerseite, Mitte und Beifahrerseite. Dabei können die einzelnen hochintegrativen Modulbauteile zur Erhöhung der Stabilität auch miteinander direkt verbunden sein. Dieser modulare Aufbau ermöglicht zudem eine schnellere Realisierung von Änderungen einzelner Baureihen. Vorteilhafterweise ist auch die Anordnung zumindest zweier hochintegrativer Modulbauteile in Querrichtung des Querträgers hintereinander vorgesehen, die insbesondere miteinander verbunden sind.

Bevorzugt ist an das hochintegrative Modulbauteil zumindest eine Funktionsbaugruppe angebunden oder integriert. Beispielhaft seien folgende Funktionsbaugruppen genannt: Instrumententafel, Blenden, Tunnel- oder Stimwandabstützung, A-Säulenanbindung, Tachometer, Displays, Radio, Lautsprecher, Antenne, Navigationssystem, Bedien- und Steuergeräte, Sensoren, Motoren, RFID, Kabelbaum, Schläuche, Rohre, Leitungen, Stecker, Scheibenwisch-Anlage, Dichtung zur Frontscheibe, Lenksäule, Pedalträger Pedale, Pedalwertgeber, Metall- oder Kunststoffhalter, Airbag incl. Generatoren, Deformationselemente, Knieschutz, Schäume, Dämpfungselemente, Fußraumverkleidung, Dämmwand, Dämmmatte, GPS, Rechner, , Lichtleiter, Lichtquellen, Teile der Heiz-/Klimaanlage, wie insbesondere Gehäuse, Gebläse, Filter, Luftein- und -auslasselemente, Klappen, insbesondere dreh- oder verschwenkbare Klappen, Luftausströmer, Kinematiken, Hebel oder Motoren, Ablagen, Handschuhfach, Mittelkonsole, sowie Schaltungen die am Querträger angebracht sind. Zu einer Funktionsbaugruppe im Frontendbereich gehören beispielsweise: Kühlmodule, Scheinwerfer, Steuergeräte, Stoßfänger, Dämpfungselemente, Crashboxen, Schäume, Kotflügel, Wassertanks, Motoren, Filter, Sensoren, beispielsweise für die Entfernungsmessung, Rohre, Luftleitelemente, Dichtelemente, Leitungssatz, Fanfare oder eine Schließeinheit für Motorhauben. Das hochintegrative Modulbauteil kann direkt auch die Funktionen einzelner Funktionsbaugruppen ganz oder teilweise ersetzen. Ebenfalls kann das hochintegrative Modulbauteil kompatible Schnittstellen, wie bspw. einen Fügeflansch oder einen Teil einer Nut-Feder-Verbindung, aufweisen und die miteinander zu verbindenden Elemente über Indexelemente lagerichtig positionieren.

Bei dem oder den Befestigungselementen handelt es sich vorzugsweise um bandartige, fest um den Querträger unter Anlage an denselben anziehbare Elemente, wie insbesondere Laschen, Kabelbinder oder Metallschellen. In der Regel sind mehrere Befestigungselemente über die Länge des Querträgers vorgesehen, in Sonderfällen oder bei geringen Belastungen kann auch ein einzelnes Befestigungselement ausreichen. Der Kraftfluss wird hierbei vorzugsweise durch eine formschlüssige Geometrie und/oder ein Klemmen zwischen hochintegrativen Modulbauteil und Querträger gewährleistet.

Der Querträger kann zwischen zwei oder ggf. auch mehr hochintegrativen Modulbauteilen aufgenommen sein. Insbesondere kann das Befestigungselement in diesem Fall mehrteilig ausgebildet sein, wobei zumindest ein Modulbauteil selbst Teil des Befestigungselements ist und mit dem zumindest zweiten Modulbauteil mittels Schrauben o.ä. unter Einpressen des Querträgers aneinander angebracht ist. Ebenfalls kann ein Gegenelement am hochintegrativen Modulbauteil mittels Klebe-, Ultraschall-, Kontaktwärme- oder Vibrationsschweiß-Verfahrens auf der Gegenseite des hochintegrativen Modulbauteils an demselben fixiert werden, so dass der Querträger vom hochintegrativen Modulbauteil und Gegenelement, welche das Befestigungselement bilden, umschlossen ist.

Vorzugsweise ist zumindest der Kontaktbereich des Querträgers konvex, insbesondere in Form eines Kreisbogenabschnitts, ausgebildet, so dass das Befestigungselement flächig am hochintegrativen Modulbauteil und/oder am Querträger, ggf. unter Zwischenlage einer toleranzausgleichenden Schicht, wie beispielsweise eines Schaumstoffs, anliegt.

Bei bereichsweiser doppelter Wandung in Folge der flächigen Anlage des hochintegrativen Modulbauteils am Querträger wird der Querträger zusätzlich verstärkt, so dass bei entsprechender Ausgestaltung in Einzelfällen auf zusätzliche Versteifungen verzichtet werden kann. Der Kraftfluss in den Querträger kann durch die konstruktive Ausgestaltung des Modulbauteils auf relativ einfache und kostengünstige Weise optimiert werden, so dass Spannungsspitzen vermieden werden können.

Das hochintegrative Modulbauteil ist vorzugsweise als Gießteil oder Spritzgussteil, insbesondere als Kunststoff- oder Magnesium-Spritzgussteil, oder Stanz-, Tiefzieh- und/oder Biegeteil aus Metall ausgebildet. Als Materialien kommen insbesondere Kunststoff, besonders bevorzugt hochfester, faserverstärkter Kunststoff, bspw. Polyamid oder ABS (z.B. PA6 GF30) oder thermoplastische Schäume (z.B. PPE) oder Kombinationen unterschiedlicher Kunststoffe (z.B. mit amorpher und kristalliner Form, Polypropylen Talkum20 + PP + Langglasfasern), Leichtmetalle, insbesondere Aluminium oder Magnesium in Frage. Für vergossene oder spritzgegossene Materialien können ebenso Füllstoffe wie z.B. Gase oder mit Gas gefüllte Granulate zum Einsatz kommen. Dadurch können Bauteile mit Schaumcharakter zum Einsatz kommen, beispielsweise Mucell. Ebenfalls ist eine Ausgestaltung als Hybridbauteil, z.B. aus Kunststoff und Magnesium, geeignet. In das hochintegrative Modulbauteil können hierbei auch versteifende Elemente integriert sein, wie bspw. eingespritzte Versteifungen oder Einlegebleche. Die eingespritzten Versteifungen weisen vorzugsweise Merkmale wie Löcher oder Verformungen auf, um im spritzgegossenen Material eine bessere Verankerung zu erzielen.

In das hochintegrative Modulbauteil ist vorzugsweise mindestens ein Versteifungsblech integriert, insbesondere mittels Hinterspritzen des Versteifungsblechs ausgebildet. Auch eine nachträgliche Anbringung des Versteifungsblechs ist möglich. Dabei kann es sich um eine Versteifung für eine integrierte Tunnel- oder Stirnwandabstützung für den Querträger handeln. Ebenfalls sind bevorzugt Versteifungen vorgesehen, die parallel zum Querträger verlaufend im hochintegrativen Modulbauteil angeordnet sind. Als Versteifungsbleche kommen vorzugsweise KLT-beschichtete, gelochte Stahlbleche mit einer Wandstärke von 0,5 mm - 3mm, insbesondere ca. 0,8 mm in Frage.

Das hochintegrative Modulbauteil kann Rippen aufweisen, welche als Versteifungen oder als energieabsorbierende Deformationselemente dienen können.

Im hochintegrativen Modulbauteil ist am Rand der Aufnahme für den Querträger mindestens ein Schlitz oder Langloch vorgesehen, durch welchen das Befestigungselement, insbesondere bevorzugt gebildet durch eine Lasche, einen Kabelbinder, eine Befestigungsschelle aus Polyamid oder eine Metallschelle, geführt ist. Der Schlitz ist hierbei vorzugsweise derart ausgebildet, daß keine Rißbildung bei einer Belastung erfolgt. Z. B. sind an den Enden Entlastungskerben oder Entlastungslöcher möglich. Ebenfalls sind spezielle Verstärkungen zur Verhinderung einer Rissbildung im Bereich der Schlitzenden möglich.

Vorzugsweise ist für je ein Befestigungselement auf beiden Seiten der Aufnahme ein Schlitz oder Langloch auf gleicher Höhe vorgesehen, so dass das hochintegrative Modulbauteil großflächig über einen Umfangsbereich an den Querträger gepresst wird. Neben einem direkten Anliegen der Bauteile sind insbesondere auch toleranzausgleichende und/oder schwingungsdämpfende Zwischenlagen, bspw. aus Schaumstoff, Gummi oder ggf. auch Klebstoff, möglich.

Das hochintegrative Modulbauteil bildet vorzugsweise einen Teil eines Kanals, insbesondere eines Luftkanals, durch den Luft dem Fahrzeuginnenraum zuführbar ist.

Vorteilhafterweise ist an das hochintegrative Modulbauteil zumindest ein Bauteil einer Heizungs- und/oder Klimaanlage, beispielsweise ein Teil des Luftführungsgehäuses angebunden oder integriert.

Am hochintegrativen Modulbauteil ist hierbei bevorzugt ein abdeckendes Element angebracht, so dass das Modulbauteil in Verbindung mit dem abdeckenden Element den Luftkanal bildet. Dieser kann einen beliebigen Querschnitt und Verlauf über das Modulbauteil aufweisen. Das abdeckende Element ist hierbei bevorzugt aus einem leichten Material, wie PE, PP, PET-Vlies oder PE-Schaum, insbesondere bevorzugt sind ein- oder mehrlagige, vernetzte Polyolefin-Schäume mit Rohdichten von 20 bis 200 kg/m³. Diese können bei der Montage gedrückt werden und wirken akustisch dämpfend. Die Verbindung zum hochintegrativen Modulbauteil kann bspw. mittels Kleben oder Reibschweißen erfolgen.

Auch der Querträger selbst kann einen Hohlraum zum Durchführen eines Mediums, insbesondere von Luft, aufweisen. Hierbei können Anschlüsse an den durch den Hohlraum gebildeten Kanal durch entsprechend ausgebildete hochintegrative Modulbauteile gebildet werden.

Um eine exakte und verdrehsichere Anbringung des hochintegrativen Modulbauteils am Querträger zu ermöglichen, weist der Kontaktbereich am Querträger und der entsprechende Kontaktbereich am Modulbauteil jeweils ein Element zur Indexierung und/oder Lageorientierung beziehungsweise ein entsprechendes, komplementäres Element auf. Als Elemente können beispielsweise Nuten, Sicken, Fixierbolzen, Einprägungen oder Anschläge dienen.

Bevorzugt wird der Querträger durch ein Rohr gebildet, insbesondere einem Stahlrohr mit einem Durchmesser von ca. 40 mm - 100 mm, besonders bevorzugt ca. 60 mm und Wandstärken von ca. 1,5 mm. Hierbei sind die Fertigungskosten relativ gering. Zudem kann Material eingespart werden. Im Prinzip ist auch die Ausgestaltung des Querträgers mittels zweier Halbschalen möglich, die miteinander auf bekannte Weise verbunden sind. Dabei können in einer oder beiden Halbschalen versteifende Elemente vorgesehen sein. Die Halbschalen sind vorzugsweise Strangpress- oder Walzprofile, die in unverformten Zustand ein durchgehendes Profil aufweisen. Alternativ können die Halbschalen auch durch Hydroformen oder auf sonstige Weise hergestellt sein. Ebenfalls kann der Querträger, insbesondere in Rohrform, auch aus kohlefaserverstärktem Kunststoff, mit Aramidgewebe oder mit gemischten Fasern verstärktem Kunststoff bestehen.

Zur Erhöhung der Steifigkeit kann der Querträger in seinem Innenraum und/oder gegebenenfalls Außenbereich, sofern dies die Anbringung der hochintegrativen Modulbauteile zulässt, versteifende Elemente aufweisen, wobei es sich beispielsweise um eine Kunststoffstruktur, vorzugsweise mit kreuzförmig verlaufenden Rippen oder einer wabenartigen Struktur, handelt. Diese kann relativ einfach angespritzt werden und erhöht die Steifigkeit deutlich bei relativ geringem Gewicht. Trotz der versteifenden Elemente können im Innenraum des Querträgers Kanäle für ein durchzuführendes Medium vorgesehen sein.

Im Folgenden wird die Erfindung anhand von mehreren Ausführungsbeispielen, teilweise mit Varianten, unter Bezugnahme auf die Zeichnung im Einzelnen erläutert. In der Zeichnung zeigen:
- Fig. 1: eine Darstellung der Bauteile vor der Montage und nach der Montage für einen Querträger mit hochintegrativem Modulbauteil gemäß dem ersten Ausführungsbeispiel,
- Fig. 2: eine schematische Schnittdarstellung quer durch einen Querträger mit hochintegrativem Modulbauteil gemäß dem zweiten Ausführungsbeispiel,
- Fig. 3: eine schematische Schnittdarstellung quer durch einen Querträger mit hochintegrativem Modulbauteil gemäß dem dritten Ausführungsbeispiel,
- Fig. 4: eine Variante des ersten Ausführungsbeispiels,
- Fig. 5: eine zweite Variante des ersten Ausführungsbeispiels,
- Fig. 6: eine schematische Draufsicht auf ein Strukturbauteil gemäß dem vierten Ausführungsbeispiel,
- Fig. 7: eine Seitenansicht des vierten Ausführungsbeispiels, und
- Fig. 8: eine Draufsicht auf das fünfte Ausführungsbeispiel.

Ein Querträger 1 eines Kraftfahrzeugs wird gemäß dem ersten Ausführungsbeispiel durch eine Rohr 2 gebildet. Hierbei handelt es sich um eine Metall-struktur, die mittels Strangpressen oder Rollformen hergestellt ist und über im Wesentlichen die gesamte Länge einen etwa kreisförmigen Querschnitt aufweist. Vorliegend weist der Querträger 1 einen Versatz im Bereich der Anbindung für die Lenksäule auf. Am Querträger 1 sind direkt endseitig zwei Anbindungen 1' für die Befestigung des Querträgers 1 an die beiden A-Säulen, eine Anbindung 1" für die Lenksäule und eine Anbindung 1"' für den Beifahrerairbag angeschweißt.

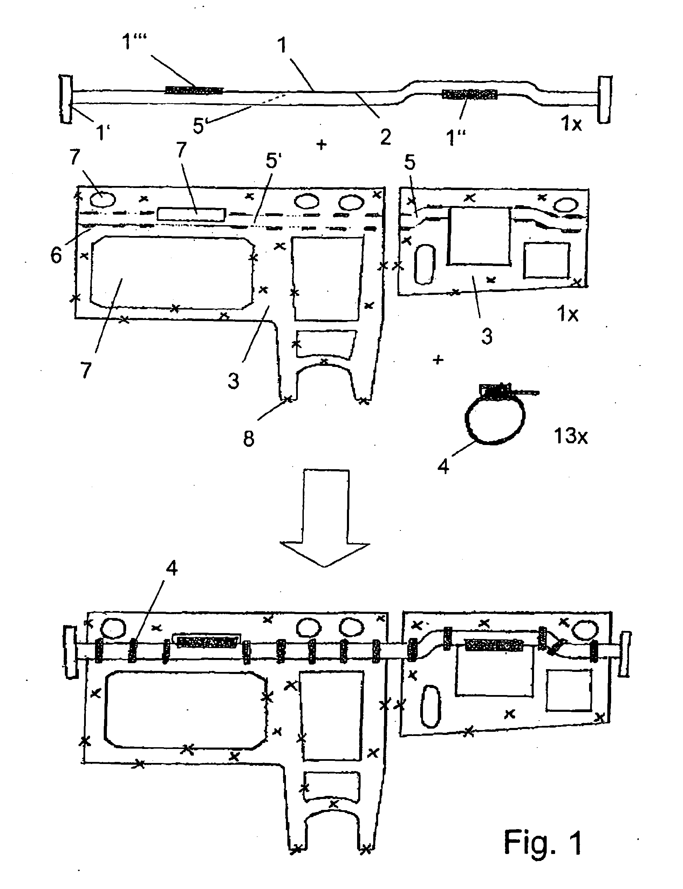

Am Querträger 1 sind gemäß dem ersten Ausführungsbeispiel zwei flexibel einsetzbare hochintegrative Modulbauteile 3, mit Hilfe von insgesamt dreizehn als Befestigungselemente 4 dienenden Kabelbindern auf im Folgenden näher beschriebene Weise angebracht. Bei den beiden hochintegrativen Modulbauteilen 3 handelt es sich jeweils um ein Kunststoff-Spritzgussteil mit einer Mehrzahl von Öffnungen, Haltevorrichtungen, Schraubdomen, in Fig. 1 angedeutet durch "X", die zur Anbindung am hochintegrativen Modul zu befestigender Bauteile dienen.

Die hochintegrativen Modulbauteile 3 weisen, Aufnahmen 5 bildende Vertiefungen auf, deren Abmessungen so ausgelegt sind, dass die hochintegrativen Modulbauteile den Querträger bis etwa zur Mittelebene desselben in der Aufnahme 5 aufnehmen, so dass ein relativ großflächiger Kontaktbereich 5' zwischen hochintegrativem Modulbauteil 3 und Querträger 1 gebildet wird.

Ferner sind in die hochintegrativen Modulbauteile 3 beidseitig entlang der Aufnahme 5 insgesamt sechsundzwanzig Schlitze 6 vorgesehen, wobei jeweils zwei Schlitze 6 auf einander gegenüberliegenden Seiten der Aufnahme 5 angeordnet sind.

Der Innenraum des Querträgers 1 ist gemäß dem vorliegenden Ausführungsbeispiel hohlzylindrisch ausgebildet, so dass die Durchführung von Luft möglich ist. Damit ist ein Teil des Belüftungssystems in den Querträger 1 integrierbar. Anstelle oder neben Luft können auch andere Medien durch den Querträger 1 geleitet werden. Der Querträger 1 weist quer zu seiner Längserstreckung angeordnete Öffnungen (nicht dargestellt) zum Ein- und Ausleiten der Luft auf. Entsprechende Öffnungen 7 für die Lufteinleitung in den Fahrzeuginnenraum sind auch in den hochintegrativen Modulbauteilen vorgesehen. In den hochintegrativen Modulbauteilen sind ferner weitere Öffnungen für die am Querträger 1 angeschweißten Anbindungen 1" und 1"' sowie für andere Zwecke, wie bspw. Kabeldurchführungen, vorgesehen. Zudem ist am hochintegrativen Modulbauteil 3 eine Tunnelabstützung 8 vorgesehen.

Alternativ zur hohlzylindrischen Ausgestaltung des Querträgers 1 sind auch beliebige andere Querschnittsformen möglich, wie insbesondere ovale, rechteckförmige Querschnitte oder als Vieleck ausgebildete Querschnitte.

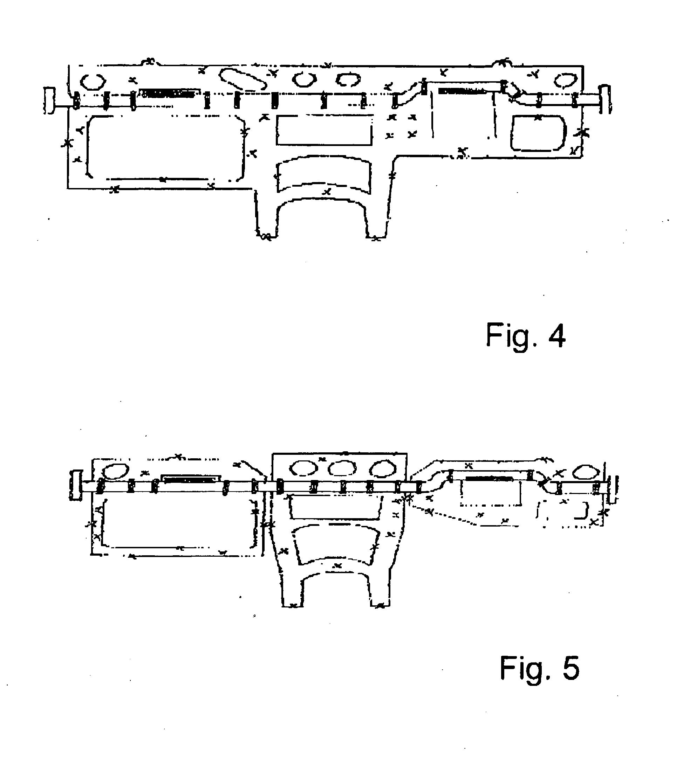

In den Figuren 4 und 5 sind Varianten der Ausgestaltung des bzw. der hochintegrativen Modulbauteile 3 dargestellt. So kann die Ausgestaltung einstückig, wie in Fig. 4 dargestellt, oder mehrteilig, wie in Fig. 5 dargestellt, erfolgen, wobei vorliegend im Falle einer mehrteiligen Ausgestaltung der hochintegrativen Modulbauteile zwischen den einzelnen Modulbauteilen 3 Anbindungsstellen (mit "X" gekennzeichnet), vorgesehen sind.

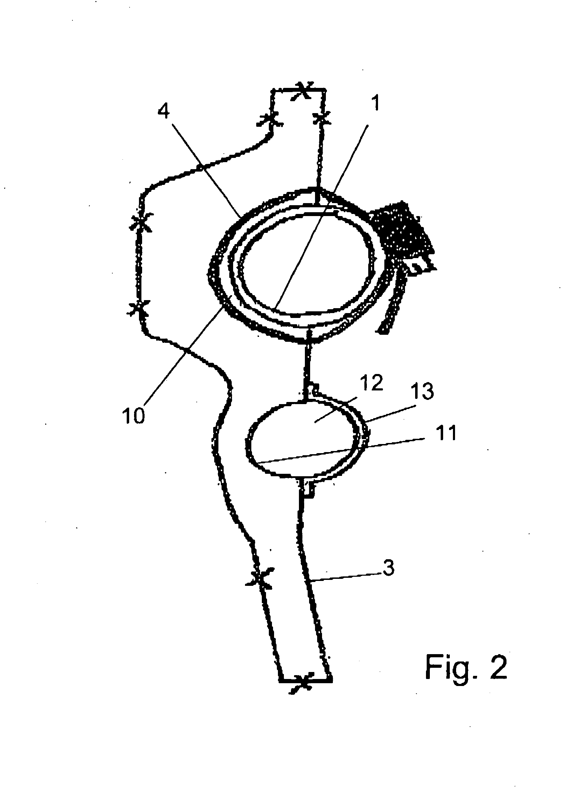

Fig. 2 zeigt ein zweites Ausführungsbeispiel eines Querträgers 1, gebildet durch ein Rohr 2 mit kreisförmigem Querschnitt, und einem hieran angebrachten hochintegrativen Modulbauteil 3, welches Seitenteile aufweist, an denen Haltevorrichtungen und Schraubdome vorgesehen sind, angedeutet durch "X", die zur Anbindung am hochintegrativen Modulbauteil zu befestigender Bauteile dienen.

Das hochintegrative Modulbauteil 3 ist, entsprechend dem Modulbauteil 3 des ersten Ausführungsbeispiels, mit Hilfe von einer Mehrzahl von Kabelbindern am Querträger 1 angebracht, wofür im hochintegrativen Modulbauteil 3 Schlitze vorgesehen sind. Im Gegensatz zum ersten Ausführungsbeispiel ist das hochintegrative Modulbauteil 3 derart ausgebildet, dass es neben der Aufnahme 5 für den Querträger 1 eine weitere halbzylindrisch ausgebildete Vertiefung 11 aufweist, welche einen Teil eines Luftkanals 12 bildet, durch welchen Luft von einer Klimaanlage dem Fahrzeuginnenraum zugeführt werden kann. Der zweite Teil des Luftkanals 12 wird durch einen Luft-Halbkanal 13 gebildet, der direkt am hochintegrativen Modulbauteil 3 vorliegend mittels Reib- oder Ultraschallschweißen angebracht ist.

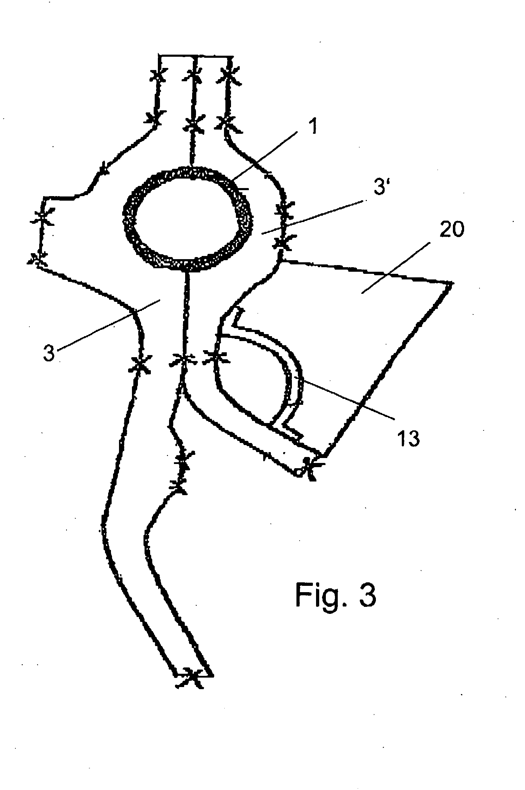

Fig. 3 zeigt ein drittes Ausführungsbeispiel eines Querträgers 1, ebenfalls gebildet durch ein Rohr mit kreisbogenförmigem Querschnitt, und zwei hieran angebrachten hochintegrativen Modulbauteilen 3, 3', welche den Querträger 1 zwischen sich aufnehmen. Gemäß der Darstellung von Fig. 3 erfolgt die Fixierung der beiden Modulbauteile 3, 3' am Querträger 1, welcher wiederum durch ein Rohr mit einem kreisförmigen Querschnitt gebildet ist, mittels mehrerer Verbindungsstellen, wobei in der Darstellung von Fig. 3 drei derselben durch "X" gekennzeichnet sind. Die hochintegrativen Modulbauteile 3, 3' weisen vorliegend eine massive Gestalt auf, wobei an einem der Modulbauteile 3' ein Luft-Halbkanal 13 angebracht ist, sowie ein Teil einer Klimaanlage 20 integriert ist.

Alternativ kann die Fixierung am Querträger 1 auch mittels Kabelbindern oder Metallschellen erfolgen, wobei diese jeweils außen um den entsprechenden Bereich der hochintegrativen Modulbauteilen 3, 3' und durch miteinander fluchtende Schlitze auf beiden Seiten des Querträgers 1 geführt sind.

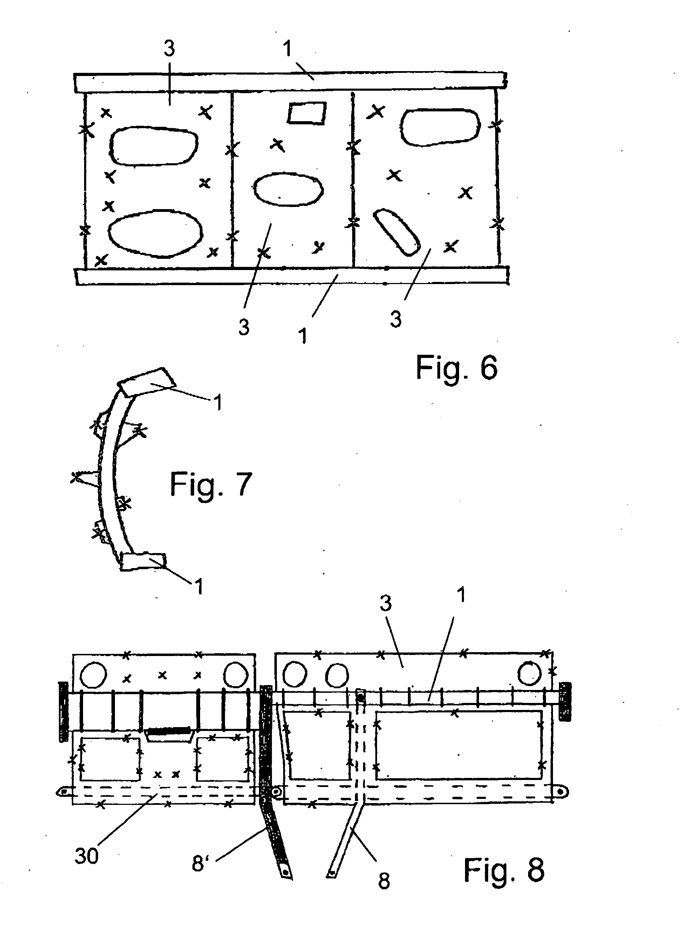

In den Figuren 6 und 7 ist ein viertes Ausführungsbeispiel dargestellt, wobei zwei Querträger 1, nämlich ein oberer und ein unterer Stirnwandträger, vorgesehen sind, zwischen denen vorliegend drei hochintegrative Modulbauteile 3 angeordnet sind. Die Querträger 1 gemäß dem vierten Ausführungsbeispiel weisen etwa rechteckförmige Querschnitte auf, wobei die hochintegrativen Modulbauteile 3 - entsprechend dem ersten und zweiten Ausführungsbeispiel - einen überwiegend flächigen Kontaktbereich mit den Querträgern 1 haben. Zur Fixierung sind wiederum Kabelbinder (nicht dargestellt) vorgesehen, welche jeweils durch einen Schlitz im Modulbauteil 3 geführt sind.

Fig. 8 zeigt das fünfte Ausführungsbeispiel. Hierbei weist die dargestellte Querträgeranordnung den Querträger 1, gebildet durch einen mehrteiligen Stahlquerträger mit unterschiedlichen Durchmessern für Fahrer- und Beifahrerseite, wobei die Stahlquerträger mittels Schweißens fest miteinander verbunden sind, an den Querträger 1 rechts und links angeschweißte Anbindungen für die A-Säulen, sowie eine angeschweißte Tunnelabstützung 8', und zwei mittels mehrerer Metallschellen am Querträger 1 angebrachte hochintegrative Modulbauteile 3 auf. Diese weisen im eingebauten Zustand im Kniebereich parallel zum Querträger 1 verlaufend angeordnete Versteifungsbleche 30 auf, die von einer A-Säule zur anderen A-Säule verlaufen, wobei sie im Zwischenbereich der hochintegrativen Modulbauteile 3 miteinander verbunden sind. Die Versteifungsbleche 30 sind jeweils mittels Hinterspritztechnik direkt in die Modulbauteile 3 integriert. Die Versteifungsbleche weisen Langlöcher zum Toleranzausgleich bei der Fahrzeugmontage auf.

Am in Fig. 8 rechts dargestellten hochintegrativen Modulbauteil 3 ist zudem eine Tunnelabstützung 8 aus Stahl integriert, welche über das Modulbauteil 3 am Querträger 1 angebracht ist.

Alternativ zur integrierten Ausgestaltung mit einem Versteifungsblech kann - entsprechend dem vierten Ausführungsbeispiel - ein zweiter Querträger angebracht werden.

## Patentansprüche

1. Querträgeranordnung, insbesondere für ein Kraftfahrzeug, bestehend aus einem Querträger (1) an dem mindestens ein hochintegratives Modulbauteil (3) angebracht ist, das zur Anbringung von Bauteilen am Querträger dient, wobei das hochintegrative Modulbauteil (3) in Teilbereichen eine dem Außenprofil des Querträgers (1) korrespondierende Aufnahme (5) für den Querträger (1) aufweist, welche einen Kontaktbereich (5') zwischen dem hochintegrativen Modulbauteil (3) und dem Querträger (1) bildet, und dass das hochintegrative Modulbauteil (3) am Querträger (1) mittels mindestens eines den Querträger (1) in seinem Umfang zumindest teilweise umschließenden Befestigungselements (4) lösbar angebracht ist, **dadurch gekennzeichnet, dass** im hochintegrativen Modulbauteil (3) am Rand der Aufnahme (5) für den Querträger (1) mindestens ein Schlitz oder ein Langloch (6) vorgesehen ist, durch welchen das Befestigungselement (4) geführt ist.

2. Querträgeranordnung nach Anspruch 1, **dadurch gekennzeichnet, dass** das Befestigungselement (4) eine Lasche, ein Kabelbinder, eine Metallschelle, eine Schlauchschelle, eine Befestigungsschelle oder zumindest ein zweites hochintegratives Modulbauteil (3') ist.

3. Querträgeranordnung nach einem der vorhergehenden Ansprüche, **dadurch gekennzeichnet, dass** das hochintegrative Modulbauteil (3) als Gießteil, Spritzgussteil oder Stanz-Biegeteil ausgebildet ist.

4. Querträgeranordnung nach einem der vorhergehenden Ansprüche, **dadurch gekennzeichnet, dass** das hochintegrative Modulbauteil (3) Rippen aufweist, die als Versteifungen oder als energieabsorbierende Bauteile dienen.

5. Querträgeranordnung nach einem der vorhergehenden Ansprüche, **dadurch gekennzeichnet, dass** das hochintegrative Modulbauteil (3) zumindest 5 Integrations- oder Halteelemente aufweist.

6. Querträgeranordnung nach einem der vorhergehenden Ansprüche, **dadurch gekennzeichnet, dass** in Längsrichtung des Querträgers (1) zumindest zwei, vorzugsweise drei hochintegrative Modulbauteile (3) vorgesehen sind wobei diese insbesondere miteinander verbunden sind.

7. Querträgeranordnung nach einem der vorhergehenden Ansprüche, **dadurch gekennzeichnet, dass** in Querrichtung des Querträgers (1) zumindest zwei, hochintegrative Modulbauteile (3) hintereinander angeordnet sind wobei diese insbesondere miteinander verbunden sind.

8. Querträgeranordnung nach einem der vorhergehenden Ansprüche, **dadurch gekennzeichnet, dass** an das hochintegrative Modulbauteil (3) zumindest eine Funktionsbaugruppe angebunden oder integriert ist.

9. Querträgeranordnung nach einem der vorhergehenden Ansprüche, **dadurch gekennzeichnet, dass** das an das hochintegrative Modulbauteil (3) zumindest ein Bauteil einer Heizungs- und/oder Klimaanlage angebunden oder integriert ist.

10. Querträgeranordnung nach einem der vorhergehenden Ansprüche, **dadurch gekennzeichnet, dass** das hochintegrative Modulbauteil (3) einen Teil eines Luftkanals (12) bildet.

11. Querträgeranordnung nach Anspruch 7, **dadurch gekennzeichnet, dass** am hochintegrativen Modulbauteil (3) ein abdeckendes Element (13) angebracht ist, so dass das hochintegrative Modulbauteil (3) in Verbindung mit dem abdeckenden Element (13) den Luftkanal (12) bildet.

12. Querträgeranordnung nach einem der vorhergehenden Ansprüche, **dadurch gekennzeichnet, dass** zwei hochintegrative Modulbauteile (3, 3') aneinander angebracht sind, wobei der Querträger (1) zwischen den hochintegrativen Modulbauteilen (3, 3') aufgenommen und fixiert ist.

13. Querträgeranordnung nach einem der vorhergehenden Ansprüche, **dadurch gekennzeichnet, dass** in das hochintegrative Modulbauteil (3) mindestens ein Versteifungsblech (30) integriert ausgebildet ist.

14. Querträgeranordnung nach einem der vorhergehenden Ansprüche, **dadurch gekennzeichnet, dass** in das hochintegrative Modulbauteil (3) mindestens eine Tunnelabstützung (8) integriert ausgebildet ist.

15. Querträgeranordnung nach einem der vorhergehenden Ansprüche, **dadurch gekennzeichnet, dass** der Kontaktbereich (5') am Querträger (1) und der entsprechende Kontaktbereich (5) am hochintegrativen Modulbauteil (3) jeweils ein Element zur Indexierung, Fixierung und/oder Lageorientierung beziehungsweise ein entsprechendes, komplementäres Element aufweisen.

16. Querträgeranordnung nach einem der vorhergehenden Ansprüche, **dadurch gekennzeichnet, dass** das hochintegrative Modulbauteil (3) Funktionen einzelner Funktionsbaugruppen ganz oder teilweise ersetzt.

17. Kraftfahrzeug, **dadurch gekennzeichnet, dass** das Kraftfahrzeug eine Querträgeranordnung nach einem der vorhergehenden Ansprüche aufweist.

## Claims

1. Crossmember arrangement, in particular for a motor vehicle, comprising a crossmember (1) to which is fitted at least one highly integrative modular component (3) designed for mounting components on the crossmember, wherein the highly integrative modular component (3) is provided in part-regions with a location (5) for the crossmember (1), which corresponds to the external profile of the crossmember (1) and forms a contact region (5') between the highly integrative modular component (3) and the crossmember (1), and wherein the highly integrative modular component (3) is releasably attached to the crossmember (1) by means of at least one mounting element (4) which at least partially encloses the circumference of the crossmember, **characterised in that** at least one slot or oblong hole (6) through which the mounting element (4) passes is provided in the highly integrative modular component (3) on the edge of the location (5) for the crossmember (1).

2. Crossmember arrangement according to claim 1, **characterised in that** the mounting element (4) is a link plate, a cable tie, a metal clamp, a hose clip, a mounting clamp or at least one second highly integrative modular component (3').

3. Crossmember arrangement according to any of the preceding claims, **characterised in that** the highly integrative modular component (3) is designed as a casting, an injection moulded part or a stamped and bent part.

4. Crossmember arrangement according to any of the preceding claims, **characterised in that** the highly integrative modular component (3) is provided with ribs serving as reinforcements or energy absorbing components.

5. Crossmember arrangement according to any of the preceding claims, **characterised in that** the highly integrative modular component (3) is provided with at least 5 integration or retaining elements.

6. Crossmember arrangement according to any of the preceding claims, **characterised in that** at least two and preferably three highly integrative modular components (3) which are in particular connected to one another are provided in the longitudinal direction of the crossmember (1).

7. Crossmember arrangement according to any of the preceding claims, **characterised in that** at least two highly integrative modular components (3) which are in particular connected to one another are arranged one behind the other in the transverse direction of the crossmember (1).

8. Crossmember arrangement according to any of the preceding claims, **characterised in that** at least one functional assembly is attached to or integrated with the highly integrative modular component (3).

9. Crossmember arrangement according to any of the preceding claims, **characterised in that** at least a part of a heating and/or air conditioning system is attached to or integrated with the highly integrative modular component (3).

10. Crossmember arrangement according to any of the preceding claims, **characterised in that** the highly integrative modular component (3) forms a part of an air duct (12).

11. Crossmember arrangement according to claim 7, **characterised in that** a cover element (13) is fitted to the highly integrative modular component (3), so that the highly integrative modular component (3) forms the air duct (12) together with the cover element (13).

12. Crossmember arrangement according to any of the preceding claims, **characterised in that** two highly integrative modular components (3, 3') are fitted to each other, the crossmember (1) being accommodated between the highly integrative modular components (3, 3').

13. Crossmember arrangement according to any of the preceding claims, **characterised in that** at least one gusset plate (30) is integrated into the highly integrative modular component (3).

14. Crossmember arrangement according to any of the preceding claims, **characterised in that** at least one tunnel support (8) is integrated into the highly integrative modular component (3).

15. Crossmember arrangement according to any of the preceding claims, **characterised in that** the contact region (5') on the crossmember (1) and the contact region (5) on the highly integrative modular component (3) are each provided with an element for indexing, fixing and/or positioning or with a corresponding complementary element respectively.

16. Crossmember arrangement according to any of the preceding claims, **characterised in that** the highly integrative modular component (3) completely or partially replaces functions of individual functional assemblies.

17. Motor vehicle, **characterised in that** the motor vehicle is provided with a crossmember arrangement according to any of the preceding claims.

## Revendications

1. Agencement de traverse, en particulier pour un véhicule automobile, se composant d'une traverse (1) sur laquelle est fixée au moins une pièce de structure modulaire (3), à haute intégration, qui sert à la fixation de pièces de structure, sur la traverse, où la pièce de structure modulaire (3), à haute intégration, présente, dans des zones partielles, un logement (5) pour la traverse (1), correspondant au profil extérieur de la traverse (1), logement qui forme une zone de contact (5') entre la pièce de structure modulaire (3), à haute intégration, et la traverse (1), et en ce que la pièce de structure modulaire (3), à haute intégration, est fixée sur la traverse (1), de façon amovible, au moyen d'au moins un élément de fixation (4) entourant au moins partiellement la traverse (1) sur sa circonférence,
**caractérisé en ce qu'**il est prévu dans la pièce de structure modulaire (3) à haute intégration, au bord du logement (5) pour la traverse (1), au moins une fente ou un trou oblong (6) à travers laquelle ou lequel est guidé l'élément de fixation (4).

2. Agencement de traverse selon la revendication 1, **caractérisé en ce que** l'élément de fixation (4) est un collier de fixation, un collier serre-câbles, une bride de fixation métallique, un collier de serrage pour tuyaux souples, une bride de fixation ou bien au moins une deuxième pièce de structure modulaire (3') à haute intégration.

3. Agencement de traverse selon l'une ou l'autre des revendications précédentes, **caractérisé en ce que** la pièce de structure modulaire (3), à haute intégration, est configurée comme une pièce moulée, une pièce moulée par injection ou une pièce pliée et découpée.

4. Agencement de traverse selon l'une quelconque des revendications précédentes, **caractérisé en ce que** la pièce de structure modulaire (3), à haute intégration, présente des nervures qui servent de renforts ou d'éléments de structure absorbant l'énergie.

5. Agencement de traverse selon l'une quelconque des revendications précédentes, **caractérisé en ce que** la pièce de structure modulaire (3), à haute intégration, présente au moins 5 éléments d'intégration ou de retenue.

6. Agencement de traverse selon l'une quelconque des revendications précédentes, **caractérisé en ce qu'**il est prévu, dans le sens longitudinal de la traverse (1), au moins deux, de préférence trois pièces de structure modulaire (3), à haute intégration, où celles-ci sont en particulier assemblées les unes aux autres.

7. Agencement de traverse selon l'une quelconque des revendications précédentes, **caractérisé en ce qu'**au moins deux pièces de structure modulaire (3), à haute intégration, sont disposées l'une derrière l'autre, dans le sens transversal de la traverse (1), où ces pièces de structure modulaire sont en particulier assemblées les unes aux autres.

8. Agencement de traverse selon l'une quelconque des revendications précédentes, **caractérisé en ce qu'**au moins un groupe fonctionnel est fixé sur ou intégré à la pièce de structure modulaire (3) à haute intégration.

9. Agencement de traverse selon l'une quelconque des revendications précédentes, **caractérisé en ce qu'**au moins une pièce de structure d'un système de chauffage et / ou de climatisation est fixée sur ou intégrée à la pièce de structure modulaire (3) à haute intégration.

10. Agencement de traverse selon l'une quelconque des revendications précédentes, **caractérisé en ce que** la pièce de structure modulaire (3), à haute intégration, forme une partie d'un conduit d'air (12).

11. Agencement de traverse selon la revendication 7,
**caractérisé en ce qu'**un élément recouvrant (13) est fixé sur la pièce de structure modulaire (3), à haute intégration, de sorte que la pièce de structure modulaire (3), à haute intégration, forme, en association avec l'élément recouvrant (13), le conduit d'air (12).

12. Agencement de traverse selon l'une quelconque des revendications précédentes, **caractérisé en ce que** deux pièces de structure modulaire (3, 3'), à haute intégration, sont fixées l'une contre l'autre, la traverse (1) étant logée et fixée entre les pièces de structure modulaire (3, 3') à haute intégration.

13. Agencement de traverse selon l'une quelconque des revendications précédentes, **caractérisé en ce qu'**au moins une tôle de renfort (30) est configurée en étant intégrée à la pièce de structure modulaire (3) à haute intégration.

14. Agencement de traverse selon l'une quelconque des revendications précédentes, **caractérisé en ce qu'**au moins un support tunnel (8) est configuré en étant intégré à la pièce de structure modulaire (3) à haute intégration.

15. Agencement de traverse selon l'une quelconque des revendications précédentes, **caractérisé en ce que** la zone de contact (5') sur la traverse (1) et la zone de contact correspondante (5) sur la pièce de structure modulaire (3) à haute intégration présentent à chaque fois un élément servant à l'indexation, à la fixation et / ou à l'orientation de position, ou bien présentent un élément complémentaire correspondant.

16. Agencement de traverse selon l'une quelconque des revendications précédentes, **caractérisé en ce que** la pièce de structure modulaire (3) à haute intégration remplace en totalité ou en partie des fonctions de différents groupes fonctionnels.

17. Véhicule automobile, **caractérisé en ce que** le véhicule automobile présente un agencement de traverse selon l'une quelconque des revendications précédentes.
